# EUROPÄISCHE PATENTSCHRIFT

(11) **EP 3 277 742 B1**
(45) Veröffentlichungstag und Bekanntmachung des Hinweises auf die Patenterteilung: **30.03.2022**
(21) Anmeldenummer: 16726266.6
(22) Anmeldetag: 31.03.2016
(51) Int. Cl.: C08G 77/38, C08G 77/388, C08G 77/392, C08G 77/398

(54) **FLUORESZIERENDES SILOXANELASTOMER, VERFAHREN ZU DESSEN HERSTELLUNG UND DIE VERWENDUNG**
FLUORESCENT SILOXANE ELASTOMER, METHOD FOR PRODUCING SAME, AND USE
ÉLASTOMÈRE DE SILOXANE FLUORESCENT, SON PROCÉDÉ DE FABRICATION ET SON UTILISATION

(30) Priorität: 02.04.2015 DE 102015004437
(43) Veröffentlichungstag der Anmeldung: 07.02.2018
(73) Patentinhaber: Polymerics GmbH, 12681 Berlin (DE); BAM Bundesanstalt für Materialforschung und -prüfung, 12205 Berlin (DE)
(72) Erfinder: LEISTNER, Anelia, 15366 Hoppegarten OT Birkenstein (DE); SIEBLER, Daniel, 10439 Berlin (DE); LEISTNER, Andre, 15366 Hoppegarten OT Birkenstein (DE); STIER, Marina, 12557 Berlin (DE)
(74) Vertreter: Müller, Wolfram Hubertus
(86) Internationale Anmeldenummer: PCT/DE2016/000147
(87) Internationale Veröffentlichungsnummer: WO 2016/155695

(56) Entgegenhaltungen:
- EP-A2- 0 455 384
- FR-A1- 2 975 397

## Beschreibung

Die Erfindung betrifft ein fluoreszierendes Siloxanelastomer und ein Verfahren zu dessen Herstellung sowie die Verwendung des fluoreszierenden Siloxanelastomers.

Fluoreszierende Verbindungen haben die Eigenschaft, innerhalb sehr kurzer Zeit nach der Anregung durch Einwirkung von sichtbarem oder ultraviolettem Licht bzw. Röntgen- oder Elektronenstrahlen die absorbierte Energie in Gestalt von Strahlung gleicher, längerer oder kürzerer Wellenlänge wieder abzugeben. Sie weisen daher ein sehr breites Anwendungsgebiet auf und finden auf vielen technischen Gebieten insbesondere in Sensoren zur Detektion optischer Signale Verwendung.

So offenbart EP 2 472 688 A2 ein Verfahren zum Monitoring des Alterungsprozesses der Isolierung in Hochspannungskabelanlagen unter Anwendung eines faseroptischen Sensors. Die technische Weiterentwicklung auf dem Gebiet der Hochspannungskabelanlagen ist im Besonderen damit verbunden, Garnituren für den Anschluss von Kabelanlagen, Endverschlüsse, und für die Verbindung einzelner Kabel, Verbindungsmuffen, bereitzustellen, die ein Monitoring von Alterungsprozessen der Isolierungen dieser Hochspannungseinrichtungen ermöglichen und eine Fehlerortung bei Ausfällen der Isolierung, für die zunehmend transparente und transluzente Polymere Verwendung finden, wirksam unterstützen.

Trotzt hoher Anforderungen an die für Verbindungsmuffen und Endverschlüsse einzusetzenden Polymere, insbesondere in Bezug auf hohe elektrischen Isolationswerte, gute mechanische Festigkeit sowie Beständigkeit gegen hohe Temperaturen, kommt es auf Grund von Alterungserscheinungen immer wieder zu irreversiblen Schäden der Isolierung, die durch Teilentladungen verursacht sind und schließlich zu einem Durchschlag mit beträchtlichen Schäden führen können, sofern nicht durch ein geeignetes Monitoring Teilentladungen rechtzeitig erkannt und die betreffenden Anlagen abgeschaltet werden.

Aus EP 2 472 688 A2 ist zu entnehmen, als faseroptischen Sensor eine polymere fluoreszenzoptische Lichtleitfaser zu verwenden, mit der die bei Teilentladungen in der Isolierung auftretenden Lichterscheinungen detektiert werden sollen.

Aus US 5,585,915 B1 ergibt sich eine polymere fluoreszierende Lichtleitfaser auf der Basis von Polyacrylaten, Polycarbonaten, Polystyrenen oder Copolymeren daraus. Derartige Lichtleitfasern sind jedoch mit den für Kabelmuffen und Endstücke von Hochspannungskabelanlagen eingesetzten Siloxanelastomeren nicht kompatibel. Sie sind nicht ausreichend temperaturbeständig und weisen zudem eine relativ hohe Steifigkeit auf, die bei wechselnden mechanischen Belastungen, insbesondere Biegungen, zu höheren optischen Dämpfungen führt. Darüber hinaus ist ihre Dehnbarkeit gering, sie sind spröde und neigen daher zu Rissbildungen.

Die Herstellung eines fluoreszierenden Polysiloxans offenbart US 7,323,531 B1. Fluoreszierende Arylalkohole oder fluoreszierende Arylcarbinole werden mit Hydridopolysiloxanen in Gegenwart eines Platin- oder Rhodiumkatalysators unter Freisetzung von Wasserstoff zum fluoreszierenden Polysiloxan umgesetzt. Die Verwendung der genannten Katalysatoren ist jedoch mit unerwünschten Nebeneffekten verbunden. Das fertige Produkt enthält - wie in der US 7,323,531 B1 eingeräumt wird - kleine Mengen unlöslicher, offenbar vernetzter Nebenprodukte. Der bei der Reaktion freigesetzte Wasserstoff lagert sich zum Teil unter Blasenbildung im fluoreszierenden Polysiloxan ab und verleiht dem Produkt eine gewisse Trübung und Porosität. Aufgrund dieser Nebeneffekte sind derartig hergestellte fluoreszierende Polysiloxane für das Monitoring von Alterungsprozessen in Hochspannungseinrichtungen nicht geeignet.

FR 2900408 beschreibt die Synthese von linearen fluoreszierenden Polysiloxanen, die durch vollständige Umsetzung der im Polymethyl-hydridosiloxan vorhandenen Si-H-Bindungen mit allylfunktionalisierten Naphthalimid-Fluorophoren und 2-Allylhexafluoroisopropanol in verschiedenen Molverhältnissen in Gegenwart von Platinkatalysatoren herstellbar sind. Das resultierende Polymer ist homogen löslich in organischen Lösungsmitteln und aufgrund der leichten Löschung seiner Fluoreszenz und fehlender Si-H-Bindungen nicht für die Bildung von langzeitbeständigen fluoreszierenden Siloxan-Elastomeren geeignet wie sie insbesondere für die Hochspannungstechnik benötigt werden.

In FR 2975397 werden Synthesen von linearen fluoreszierenden Polysiloxanen durch Hydrosylilierungsreaktion bzw. Thiol-Ene-Addition von Alkenyl- bzw. Styryl-funktionalisierten Fluorophoren beschrieben. Als Fluorophore werden Pyren, Chinacridon, Naphthalimid und Fluoreszin beansprucht. Als Polysiloxane werden Polymethylhydridosiloxane bzw. seine Copolymeren und Poly(mercaptopropylmethylsiloxane) verwendet. Die Synthesen werden so geführt, dass alle verfügbaren Si-H- bzw. HS-Bindungen mit Fluorophoren und ggf. speziellen Substituenten wie z.B. 2-Allylhexafluoroisopropanol bzw. 4-Vinylanilin bzw. 1-Octen umgesetzt werden. Die so hergestellten Polymere sind in organischen Lösungsmitteln homogen löslich und lassen sich aus der Lösung zu dünnen Schichten verarbeiten. Sie sind außerdem diffusionsoffen für die Penetration von verschiedenen gasförmigen Molekülen, die eine Löschung der Fluoreszenz bewirken. Aufgrund dieser Eigenschaften und der chemischen Struktur (fehlende Si-H-Bindungen, langkettige Kohlenwasserstoffe in der Seitenkette) sind diese Polymere ebenfalls zur Bildung langzeitbeständiger fluoreszierender Siloxanelastomere für die Hochspannungstechnik nicht geeignet.

EP 0455384 offenbart die Herstellung eines Coumarin-substituierten Polysiloxans durch eine Polykondensationsreaktion. Hierzu wird zunächst das 7-Chlor-dimethylsilylpropoxycoumarin mit Dimethyldichlorsilan in Gegenwart von Wasser zu einem Coumarin-terminierten Polydimethylsiloxan hydrolysiert und gleichzeitig kondensiert. Im nächsten Schritt wird durch nachfolgende Cohydrolyse und Ringöffnung mit Tetramethylcyclotetrasiloxan in Gegenwart von Trifluorsulfonsäure ein H-Siloxanblock in die lineare Coumarin-terminierte Polydimethylsiloxankette eingeschoben. Die so hergestellte A-Komponente wird dann mit üblichen Vinylsiloxanen und Platinkatalysatoren in der Komponente B gemischt und bei höheren Temperaturen vernetzt.

Der Nachteil dieses Verfahrens liegt in der Herstellung der A-Komponente durch die Polykondensationsreaktion. Diese Reaktion ist eine Gleichgewichtsreaktion zwischen linearen und cyclischen Siloxanen. Die Neigung zur Bildung der cyclischen Strukturen ist umso stärker, je voluminöser der Substituent am Si-Atom ist. Es bilden sich Coumarin-substituierte Cyclo(tetra/penta/hexa)siloxane, die nicht vollständig durch die Trifluorsulfonsäure gespalten werden können. Die so hergestellte A-Komponente enthält im Endeffekt diffusionsfähige Coumarin-substituierte Cyclosiloxane, die die Fluoreszenzintensität schwächen und mit anderen Verunreinigungen aus dem Herstellungsprozess, wie Chloridionen, Trifluorsulfonsäure und Wasserspuren, die Durchschlagsfestigkeit solcher Siloxanelastomere erniedrigen. Aufgrund dessen sind sie für die Hochspannungstechnik nicht geeignet.

Aus der US 2015/0153229 A1 gehen fluoreszierende Siloxan-Hybridharze hervor, die durch Polykondensationsreaktion von alkoxysylilierten Fluoreszenzfarbstoffen mit Organosilandiolen und funktionalisierten Alkoxysilanen hergestellt werden. Als Fluoreszenzfarbstoffe werden u.a. Rhodamine, Coumarine, Fluoreszein und Perylene eingesetzt. Die funktionalisierten Alkoxysilane tragen 3-Glycidyloxypropyl-, 3-Acryloxypropyl-, 3-Methacryloxypropyl-, 3-Aminopropyl-Gruppe oder eine Vinylgruppe oder deren Gemische als funktionelle Gruppe. Die Polykondensationsreaktion wird mit Zusatz von bis zu 10% Metallhydroxiden wie z.B. Barium- oder Strontiumhydroxid katalysiert. Das so hergestellte Siloxan-Hybridharz wird thermisch in Gegenwart von Natriumhydroxid oder mit UV-Licht in Gegenwart von bis zu 4% Fotoinitiatoren, wie z.B. Allylfsulfoniumhexafluoroantiminat, vernetzt. Der Nachteil dieses Verfahrens ist die Bildung ringförmiger Siloxane, die insbesondere mit den Fluoreszenzfarbstoffen substituriert sind und aus dem vernetzten Siloxan-Hybridharz sowohl bei Raumtemperatur als auch unter Einfluss von Temperatur und Hochspannung herausdiffundieren können. Ein weiterer Nachteil sind die im Material verbleibenden Metallhydroxide und Fotoinitiatoren, die die elektrischen und optischen Eigenschaften des Materials negativ beeinflussen.

Die Aufgabe der Erfindung besteht daher darin, ein fluoreszierendes Elastomer hoher Reinheit bereitzustellen, das eine hohe Reißdehnung und Flexibilität aufweist und zudem hochtemperatur- und alterungsbeständig ist, eine hohe Durchschlagsfestigkeit besitzt und insbesondere die für die Detektion von Teilentladungen in Hochspannungskabelanlagen relevanten Absorptions- und Emissionseigenschaften erfüllt.

Des Weiteren besteht die Aufgabe der Erfindung darin, ein Verfahren zur Herstellung des fluoreszierenden Elastomers bereitzustellen.

Erfindungsgemäß wird die Aufgabe durch ein fluoreszierendes Siloxanelastomer gelöst, das in seiner Netzwerkstruktur folgende Strukturelemente enthält: 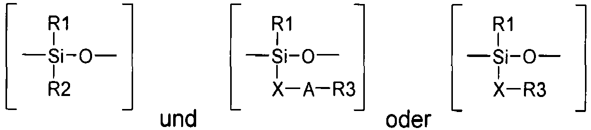 wobei:
- R1 und R2 gleich oder verschieden sind und unabhängig voneinander jeweils einen Methyl-, Phenyl-, Vinyl-Substituenten oder ein H-Atom bedeuten;
- X eine gesättigte oder ungesättigte Kohlenwasserstoffgruppe mit 2 bis 6 C-Atomen bedeutet;
- A ein Sauerstoff-, Stickstoff- oder Schwefel-Atom darstellt;
- R3 ein Fluoreszenzfarbstoff-Substituent aus der BODIPY-Familie ist.

Mit diesem erfindungsgemäßen fluoreszierenden Siloxanelastomer verbindet sich der Vorzug, elektrische Teilentladungen in Hochspannungsanlagen optisch detektieren zu können. Gegenüber den routinemäßig eingesetzten elektrischen Teilentladungsmesssystemen (z.B. MPD 600 von OMICRON Electronics GmbH, Österreich) ist die optische bzw. faseroptische Detektionsmethode nicht anfällig gegenüber elektromagnetischer Strahlung, die bei Messungen immer einen hinderlichen Grundstörpegel darstellt. Gegenüber kommerziellen akustischen Teilentladungsmesssystemen (z.B. PDL 650 von OMICRON Electronics GmbH, Österreich oder TransiNor DFA 100 von Doble Engineering Company, USA) besitzt die optische TE-Detektion den Vorteil, weitaus empfindlicher zu sein und bereits Teilentladungen mit einer scheinbaren Ladung von 1 pC zuverlässig detektieren zu können. Zudem ist durch die Verwendung fluoreszierender Siloxanelastomere als Sensormaterialien eine Lokalisierung der Teilentladungen in den einzelnen Bauteilen und damit eine Fehlerortung möglich.

Als Matrix eignen sich alle transparenten oder transluzenten additionsvernetzenden Siloxane. Im Folgenden werden einige kommerziell erhältliche Siloxansysteme genannt, die sich zur Funktionalisierung eignen. Diese Aufzählung legt jedoch keinen Wert auf Vollständigkeit aller am Markt erhältlichen Materialien. Für die Funktionalisierung eignen sich die Produkte LR 7665, LR 7600, RT 601, RT 604, LR 3003 (Wacker Chemie AG, Deutschland), OE 6630, OE 6636, OE 6550, OE 6520 (Dow Corning Corp., USA), RTV 655, RTV 615 (Momentive Performance Materials Inc, USA) und LS 6257, LS 6143, LS 6943, MED-6210 (NuSil Technology LLC, USA).

Gemäß einer besonders bevorzugten Ausführungsform der Erfindung weist der BODIPY-Farbstoff-Substituent R3 die folgende allgemeine Formel auf 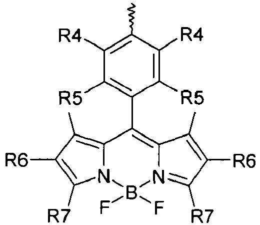 in der:
- R4, R5 gleich oder verschieden sein können und ein Wasserstoffatom, ein Fluoratom oder ein Trifluormethylrest bedeuten;
- R6 eine CH₃-oder C₂H₅-Gruppe darstellt;
- R7 ein CH₃-, C₂H₅-, 4-Dimethylaminostyryl-, 3,5-Ditrifluormethylstyryl- bzw. 4-Dimethylamino-naphthylvinyl-Rest bedeutet.

Weitere Ausführungsformen des erfindungsgemäßen fluoreszierenden Polysiloxans sind dadurch gekennzeichnet, dass sie einen Brechungsindex aufweisen, der im Bereich von 1,40 bis 1,60 liegt und/oder dass es nach der Härtung ein transparentes oder transluzentes Elastomer ist, dass es Absorptions- und Emissionsmaxima im Wellenlängenbereich von 300 nm bis 800 nm aufweist, bis 150°C temperaturbeständig ist und/oder im elektrischen Feld einer Hochspannungseinrichtung für Spannungen von 1 kV bis 500 kV alterungsbeständig ist, eine Farbstoffkonzentration von 5 ppm bis 500 ppm aufweist und eine Reißdehnung bis 400% besitzt.

Vorteilhafterweise enthält das fluoreszierende Siloxanelastomer einen Füllstoff, vorzugsweise pyrogene Kieselsäure oder Titandioxid oder Aluminiumoxid oder Zirkoniumoxid. Erfindungsgemäß wird die Aufgabe zur Herstellung eines fluoreszierenden Siloxanelastomers durch ein Verfahren gelöst, das folgende Stufen umfasst:
- Funktionalisierung des Farbstoffs mit einer ungesättigten Kohlenwasserstoffgruppe für eine Hydrosilylierungsreaktion in einem polaren Lösungsmittel bei erhöhter Temperatur und unter einer Stickstoffatmosphäre unter Normaldruck oder unter erhöhtem Druck,
- Umsetzung des funktionalisierten Farbstoffs mit einem H-Siloxan in einem unpolaren Lösungsmittel in Gegenwart von Platin oder Rhodium als Hydrosilylierungskatalysator bei Raumtemperatur oder einer erhöhten Temperatur;
- Entfernung des Katalysators mittels eines Sorbens und des Lösungsmittels unter vermindertem Druck;
- Versetzen eines additionsvernetzenden, zweikomponentigen Siloxangemisches mit dem funktionalisierten H-Siloxan bei Raumtemperatur,
- Härtung des Siloxangemisches bei einer anwendungsspezifischen Temperatur bis 200 °C.

Bevorzugte Ausführungsformen des erfindungsgemäßen Verfahrens sehen vor, dass das polare Lösungsmittel Acetonitril oder ein Alkohol ist und das unpolare Lösungsmittel Toluen oder ein anderer aromatischer Kohlenwasserstoff, ein aliphatischer oder ein chlorierter Kohlenwasserstoff, ein cyclischer Ether oder ein Vinylsiloxan ist.

Gemäß einer besonders bevorzugten Ausführungsform ist das Sorbens "Spheropor H" der Polymerics GmbH.

Des Weiteren sieht die Erfindung die Verwendung des fluoreszierenden Siloxanelastomers zur Herstellung von Sensoren zur Detektion von Teilentladungen in Hochspannungseinrichtungen, zur Herstellung von Sensoren als Lichtwellenleiter in Form von Fasern, Platten, Streifen, Scheiben oder Segmenten sowie als Werkstoff für Hochspannungseinrichtungen vor.

Im Folgenden soll die Erfindung an Hand von Beispielen jeweils in Verbindung mit Zeichnungen näher erläutert werden. Es bedeuten bzw. zeigen:
**Beispiel** 1:Allylierung des BODIPY-Fluoreszenzfarbstoffs M5
   - **Fig. 1**: Chromatogramme der Umsetzung von M5 mit Allylbromid
   - **Fig. 2**: HPLC-Chromatogramm des Farbstoffs M5-Allyl nach der Aufarbeitung
**Beispiel 2**: Kovalente Anbindung des Farbstoffs M5-Allyl an ein H-Siloxan
   - **Fig. 3**: GPC-Verfolgung der kovalenten Anbindung des Farbstoffs M5-Allyl an ein H-Siloxan
**Beispiel 3**: Herstellung eines fluoreszierenden Polysiloxans mit einem Brechungsindex 1,43 und kovalent gebundenem Farbstoff M5
   - **Fig. 4**: Fluoreszenzspektren des Farbstoffs M5, kovalent gebunden in einer Polysiloxanmatrix, bei einer Konzentration von 50 ppm M5-Allyl
   - **Fig. 5**: Fluoreszenzspektren des Farbstoffs M5, kovalent gebunden in einer Polysiloxanmatrix, bei einer Konzentration von 100 ppm M5-Allyl
   - **Fig. 6**: Fluoreszenzspektren des Farbstoffs M5, kovalent gebunden in einer Polysiloxanmatrix, bei einer Konzentration von 200 ppm M5-Allyl
**Beispiel 4:** Synthese des Coumarinfarbstoffs F4 (nicht erfinderisch).
**Beispiel 5:** Kovalente Anbindung des Farbstoffs F4 an ein H-Siloxan (nicht erfinderisch).
   - **Fig. 7**: GPC-Verfolgung der kovalenten Anbindung des Farbstoffs F4-Allyl an ein H-Siloxan
**Beispiel 6**: Herstellung eines fluoreszierenden Polysiloxans mit einem Brechungsindex von 1,43 und kovalent gebundenem Farbstoff F4 (nicht erfinderisch).
   - **Fig. 8**: Fluoreszenzspektren des Farbstoffs F4, kovalent gebunden in einer Polysiloxanmatrix
**Beispiel 7**: Herstellung eines fluoreszierenden Polysiloxans mit Brechungsindex 1,43 und kovalent gebundenen Farbstoffen F4 und M5
   - **Fig. 9**: Fluoreszenzspektren der Farbstoffkombination F4 + M5, kovalent gebunden in einer Polysiloxanmatrix
   - **Fig. 10**: Fluoreszenz-Absorptions- und Emissionsspektren der Farbstoffe F4 und M5 im Vergleich zum Teilentladungsemissionsspektrum
**Beispiel 8**: Herstellung fluoreszierender Polysiloxane mit einem Brechungsindex von 1,54 und kovalent gebundenem Farbstoff M5
   - **Fig. 11**: Fluoreszenzspektren des Farbstoffs M5, kovalent gebunden in einer hochbrechenden Polysiloxanmatrix

   - **Fig. 12**: Fluoreszenzspektren des Farbstoffs M5, kovalent gebunden in einer hochbrechenden Polysiloxanmatrix, Farbstoffkonzentration 80 ppm
   - **Fig. 13**: Fluoreszenzspektren des Farbstoffs M5, kovalent gebunden in einer hochbrechenden Polysiloxanmatrix, Farbstoffkonzentration 120 ppm
**Beispiel** 9: Synthese des Naphthalimidfarbstoffs F6 (nicht erfinderisch).
   - **Fig. 14**: Ausschnitt des ¹H-NMR-Spektrums in CDCl₃ von F6 vor dem Umsatz mit einem Überschuss von 1,1,3,3-Tetramethyldisilan
   - **Fig. 15**: Ausschnitt des ¹H-NMR-Spektrums in CDCl₃ von F6 nach dem Umsatz mit einem Überschuss von 1,1,3,3-Tetramethyldisilan
**Beispiel 10**: Bestimmung mechanischer Eigenschaften
**Beispiel 11:** Bestimmung elektrischer Eigenschaften

### Beispiele

### Beispiel 1: Allylierung des BODIPY-Fluoreszenzfarbstoffs M5

Der verwendete Fluoreszenzfarbstoff M5 (Hecht M. et al., Chemistry Open 2 (2013), S. 25-38, DOI: 10.1002/open.201200039) hat folgende Struktur: 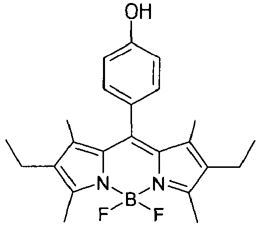 Systematischer Name nach IUPAC: 8-(4-Hydroxyphenyl)-1,3,5,7-tetramethyl-2,6-diethyl-4,4-difluoro-4-bora-3a,4a-diaza-s-indacene

### Synthese

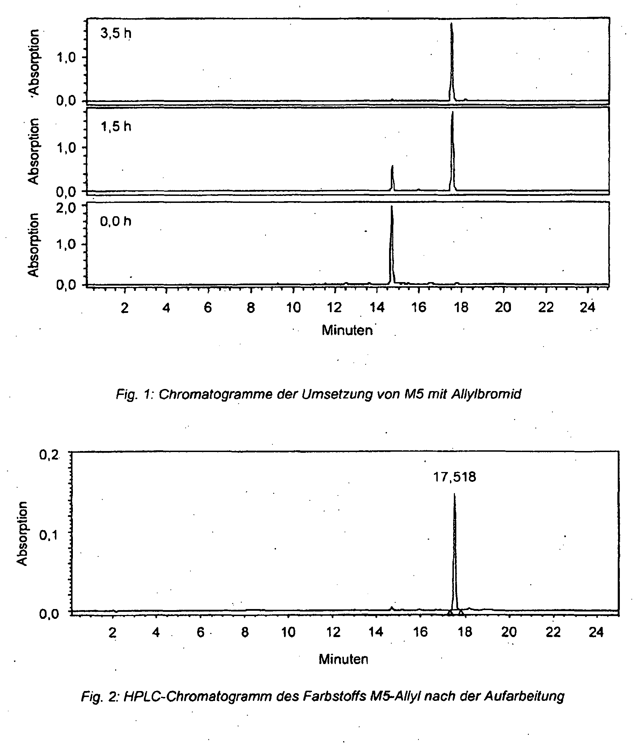

In einem 10-ml-Mikrowellen-Druckgefäß mit Septum werden 70 mg (0,177 mmol) des Farbstoffs M5 in 8 ml n-Propanol vorgelegt und unter Rühren 8,5 mg (0,212 mmol) NaOH zugegeben. Die Reaktionsmischung wurde bei Raumtemperatur bis zum vollständigen Auflösen gerührt. Eine Nullprobe (10 µl Reaktionslösung) wurde entnommen, mit 990 µl Acetonitril verdünnt und mit HPLC untersucht. Danach wurden 25,6 mg (18 µl 0,212 mmol) Allylbromid zugegeben, das Gefäß dicht verschlossen und auf 95 °C erhitzt. Zur Verfolgung der Umsetzung wurden jeweils 10 µl Reaktionslösung nach 1,5 h und nach 3,5 h entnommen, wie oben mit Acetonitril verdünnt und mit HPLC untersucht. Die erhaltenen Chromatogramme zeigt **Fig. 1**. Der mittels HPLC (bei 520 nm) bestimmte Umsetzungsgrad betrug 98%.

### Analytik

Die Verfolgung des Umsetzungsgrades erfolgte auf einer Waters-HPLC-Anlage "alliance 2625" mit Diodenarray-Detektor und einer Säule Gemini C18 (Phenomenex GmbH) bei 35 °C. Als Elutionsmittel wurde ein Gradient Acetonitril:Wasser = 20:80 bis 95:05 gefahren. Die Bestimmung des Umsetzungsgrades erfolgte mithilfe der Flächenintegrationsmethode bei 520 nm.

### Aufarbeitung der Reaktionslösung

Die Reaktion wurde nach 4 h beendet, die Reaktionslösung über eine Glasfritte filtriert und mit n-Propanol mehrmals gewaschen. Anschließend wurde das Filtrat am Rotationsverdampfer abrotiert. Der feste Rückstand wurde in 15 ml tert-Butylmethylether-Cyclohexan-Gemisch aufgenommen und in einen Scheidetrichter überführt.

Die organische Phase wurde anschließend jeweils drei mal nacheinander mit 10%iger KOH, 5%iger NaHCO₃ sowie mit destilliertem Wasser gewaschen und anschließend über Nacht über Natriumsulfat getrocknet.

Die getrocknete organische Phase wurde vom Natriumsulfat abfiltriert und das Filtrat am Rotationsverdampfer abrotiert. Der Rückstand wurde im Umlufttrockenschrank bis zur Gewichtskonstanz getrocknet und gewogen. Die Ausbeute betrug 69,5 mg bzw. 90% der Theorie. Die Reinheit des aufgearbeiteten Produkts wurde erneut mit der HPLC kontrolliert (Fig. 2). Die Feinreinigung des Produkts erfolgte anschließend auf einer präparativen Chromatografieanlage (Waters Inc., USA) mit einer XTerra-C18-Säule (Ø21 mm × 150 mm) mit Acetonitril/Wasser als Laufmittel und Photodiodenarray-Detektor.

### Beispiel 2: Kovalente Anbindung des Farbstoffs M5-Allyl an ein H-Siloxan

### Synthese

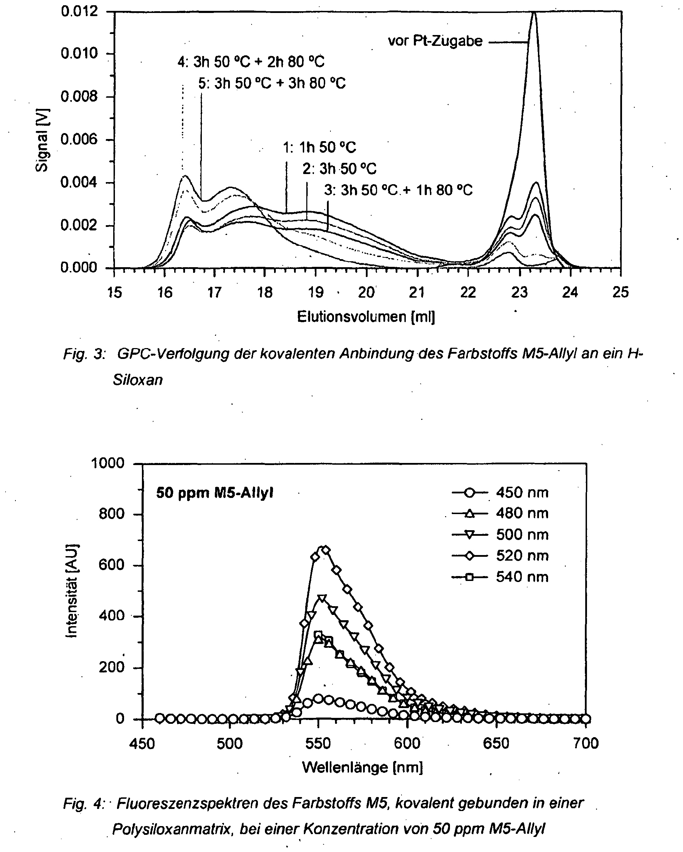

In einem 10-ml-Zweihalskolben, ausgestattet mit Rückflusskühler, Wasserbad und Magnetrührer wurden 1,25 g HMS-501 (ABCR GmbH) in 1,5 ml Toluen unter Rühren gelöst. Anschließend wurden 4 mg des Farbstoffs M5-Allyl (M = 436,8 g/mol) aus Beispiel 1 bei Raumtemperatur unter Rühren gelöst und 50 µl Reaktionslösung, verdünnt mit 1 ml THF, als Nullprobe für die GPC-Untersuchung entnommen. HMS-501 ist ein niedermolekulares H-Siloxan (M = 1000 g/mol), bestehend aus ca. 50 Mol% Methyl-Hydrid-Siloxan- und 50 Mol% Dimethylsiloxan-Grundeinheiten, das im GPC-Chromatorgamm mit THF als Laufmittel nicht sichtbar ist. Deshalb zeigt die Nullprobe in **Fig. 3** nur das Signal des Farbstoffs M5-Allyl bei einem Elutionsvolumen von 24,3 ml. An Stelle von Toluen kann auch ein anderer aromatischer Kohlenwasserstoff, ein cyclischer Ether, ein Chloralkan oder ein Vinylsiloxan oder auch ein aliphatischer Kohlenwasserstoff als Lösungsmittel verwendet werden.

Die Reaktionslösung wurde danach 7 min mit Stickstoff gespült und mit einem Septum sowie einem N₂-Ballon verschlossen. Anschließend wurden über das Septum 10 µl des verdünnten Platin-Katalysators SIP 6831.2 (ABCR GmbH, Verdünnung 1:10 mit Xylol) zugegeben und die Reaktionstemperatur auf 50 °C erhöht. Zur Verfolgung des Umsatzes wurden jede Stunde 50 µl Reaktionslösung entnommen, mit 1 ml THF verdünnt und mit der GPC untersucht. Die erhaltenen Chromatogramme sind in **Fig. 3** dargestellt. Als Katalysator ist auch Rhodium einsetzbar.

Die Reaktionstemperatur wurde nach 3 h Reaktionszeit bei 50 °C auf 80 °C erhöht und bei dieser Temperatur noch weitere 3 h gerührt. Die GPC-Chromatogramme in Fig. 3 zeigen, dass der Farbstoff M5-Allyl nach dieser Zeit nahezu vollständig an das H-Siloxan kovalent gebunden ist. Das kovalent modifizierte H-Siloxan ist jetzt als breiter Peak zwischen 22 ml und 16 ml Elutionsvolumen sichtbar, während der Farbstoff-Peak bei 23 ml nur noch in Spuren vorhanden ist.

### Analytik

Zur Verfolgung der Umsetzung wurde eine GPC-Anlage (Knauer GmbH, Berlin, Deutschland) mit UV- und RI-Detektor und 3 GPC-Säulen PL gel 300 × 7,5 mm (Polymer Laboratories Ltd., Großbritannien) mit den Ausschlussgrenzen 100 Å, 500 Å und Mixed-B eingesetzt. Als Laufmittel diente THF mit einer Flussgeschwindigkeit von 1 ml/min.

### Aufarbeitung des Reaktionsprodukts

Zur Entfernung des Katalysators und von Farbstoffresten wurde der Reaktionsansatz mit 1,5 ml Toluen verdünnt und über eine 6-ml-SPE-Säule, gefüllt mit 200 mg "Spheropor H" Sorbens (Polymerics GmbH, Berlin, Deutschland) filtriert und mit 2 mal 1,5 ml Toluen nachgewaschen. Die Filtrate wurden anschließend bei 60 °C und 21 mbar Vakuum am Rotationsverdampfer von Toluen befreit. Es wurden 1,0528 g gelb fluoreszierendes H-Siloxan als orange Flüssigkeit erhalten. Dieses Siloxan wurde als H-Siloxan-M5 bezeichnet.

### Beispiel 3: Herstellung eines fluoreszierenden Polysiloxans mit einem Brechungsindex 1,43 und kovalent gebundenem Farbstoff M5

Für die Herstellung wurde das additionsvernetzende 2K-Siloxansystem MED 6210 (Nusil Technology LLC, Carpinteria, California, USA) entsprechend Tabelle 1 eingewogen und homogenisiert.

**Tabelle 1: Prüfkörper aus MED 6210, kovalent modifiziert mit M5**

| Nr. | MED 6210 A | MED 6210 B | H-Siloxan-M5 | Konzentration M5 in der Matrix |
|---|---|---|---|---|
| 1 | 2 g | 1,935 g | 0,062 g | 50 ppm |
| 2 | 2 g | 1,875 g | 0,125 g | 100 ppm |
| 3 | 2 g | 1,750 g | 0,250 g | 200 ppm |

Die homogenisierten Mischungen wurden anschließend im Vakuumtrockenschrank entlüftet und zwischen zwei Polycarbonat-Platten mit 1-mm-Abstandshaltern zu transparenten, pinkfarbenen Plattenprüfkörpern mit einer Geometrie von 50 mm × 50 mm × 1 mm im Umlufttrockenschrank 2 h bei 120 °C ausgehärtet.

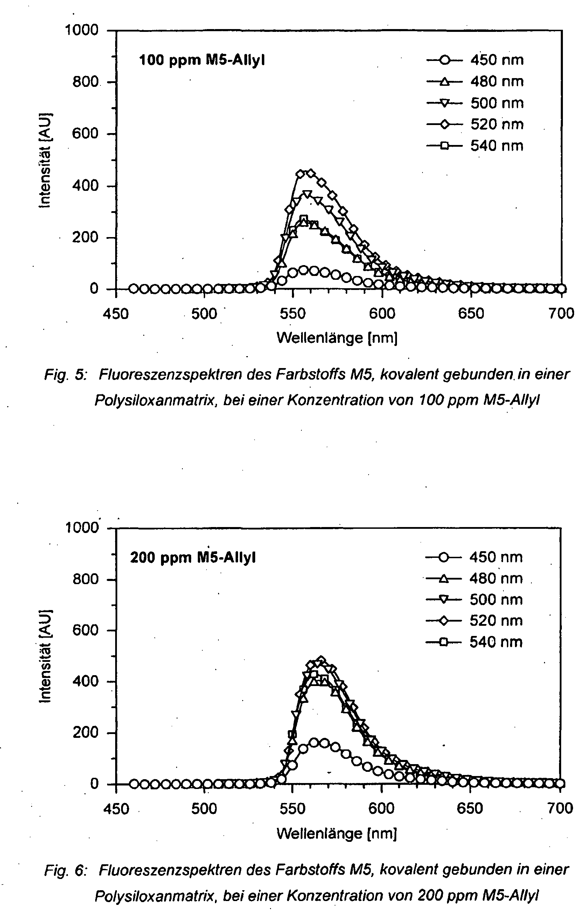

Die so hergestellten Prüfkörper wurden im Fluoreszenzspektrometer Modell Equlip (Varian Inc., USA) mit monochromatischen Wellenlängen von 450 nm bis 540 nm angeregt und das jeweilige Fluoreszenzspektrum aufgezeichnet. Die Fluoreszenz-Emissionsspektren der Proben 1 bis 3 sind in **Fig. 4****,** **Fig. 5** und **Fig. 6** dargestellt. Die Fluoreszenzspektren zeigen, dass der kovalent gebundenen Farbstoff M5 in der Polysiloxanmatrix MED 6210 im Wellenbereich 450 nm bis 540 nm absorbiert und im Wellenlängenbereich 530 nm bis 650 nm eine intensive Fluoreszenz umgekehrt proportional zur Konzentration des Farbstoffs in der Matrix emittiert.

Die Bestimmung der Fluoreszenzquantenausbeute an diesem fluoreszierenden Polysiloxan ergab unerwartet den gleichen Wert von Φᵣ = 0,92 wie für den nicht kovalent gebundenen Farbstoff M5 in Diethylether. Die Anbindung des Farbstoffs an die Polysiloxankette hat seine Emissionsintensität nicht verringert.

Darüber hinaus hat ein Extraktionsversuch (72 h mit CH₂Cl₂) gezeigt, dass der gebundene Farbstoff migrationsfest ist. Das heißt, die optischen Eigenschaften dieses Polymeren können vorteilhafterweise langzeitstabil erhalten bleiben.

### Beispiel 4: Synthese des Coumarinfarbstoffs F4 (nicht erfinderisch).

Der synthetisierte Fluoreszenzfarbstoff F4 hat folgende Struktur: 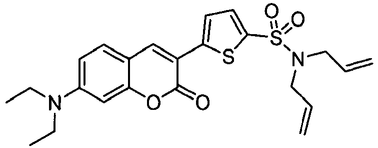 400 mg 7-Diethylamino-3-thiophen-2-yl-chromen-2-one (FEW Chemicals GmbH, Deutschland) wurden in einem Einhalskolben vorgelegt und in 20 ml Chloroform gelöst. Anschließend wurden bei 0 °C 2 ml Chlorsulfonsäure zugetropft und die Reaktionslösung über 30 Minuten langsam auf Raumtemperatur erwärmt. Nach 2 Stunden wurde zu der roten Reaktionslösung Eiswasser gegeben. Der rötliche Niederschlag wurde abgesaugt, mit je 50 ml gesättigter Natriumhydrogencarbonatlösung, Wasser (2×) und Methanol (2×) gewaschen und anschließend im Vakuum getrocknet.

In einen Einhalskolben wurden 0,109 g Diallylamin Hydrochlorid vorgelegt und in einem Gemisch aus 6 ml Acetontril, 4 ml Chloroform und 3 ml Triethylamin gelöst. Zu dieser Lösung wurden unter Rühren 236 mg des rötlichen Sulfochlorids gegeben und die Mischung 16 Stunden bei 50 °C gerührt. Anschließend wurde das Lösungsmittel unter vermindertem Druck entfernt und das Rohprodukt in 50 ml Dichlormethan aufgenommen. Die grüne Lösung wurde mit je 50 ml gesättigter Natriumhydrogencarbonatlösung (2×), 10%iger Zitronensäure (2x) und gesättigter wässriger Natriumchloridlösung gewaschen und über Magnesiumsulfat getrocknet. Der Rückstand wurde anschließend an Kieselgel 60 säulenchromatographisch gereinigt und das Produkt mit einer Mischung aus Dichlormethan/Cyclohexan (3:1) eluiert. Nachdem das Lösungsmittelgemisch im Vakuum entfernt wurde, wurden 197 mg F4 erhalten.

¹H NMR(400 MHz): δ[ppm] = 7,99 (s, 1H), 7,52 (d, J = 1,2 Hz, 2H), 7,36 (d, J = 8,9 Hz, 1H), 6,65 (dd, J = 8,7, 2,7 Hz, 1H), 6,54 (d, J = 2,5 Hz, 1H), 5,70 (tdd, J = 16,6, 10,1, 6,4 Hz, 2H), 5,19 (ddd, J = 17,1, 1,2 Hz, 4H), 5,17 (ddd, J = 10,7, 1,2 Hz, 4H), 3,85 (d, J = 6,3 Hz, 4H), 3,45 (q, J = 7,2 Hz, 4H), 1,24 (t, J = 7,1 Hz, 6H).

Quantenausbeute von F4 (10⁻⁵ M) in Momentive RTV 655: λₑₓ(421)= 0,89.

### Beispiel 5: Kovalente Anbindung des Farbstoffs F4 an ein H-Siloxan (nicht erfinderisch).

### Synthese

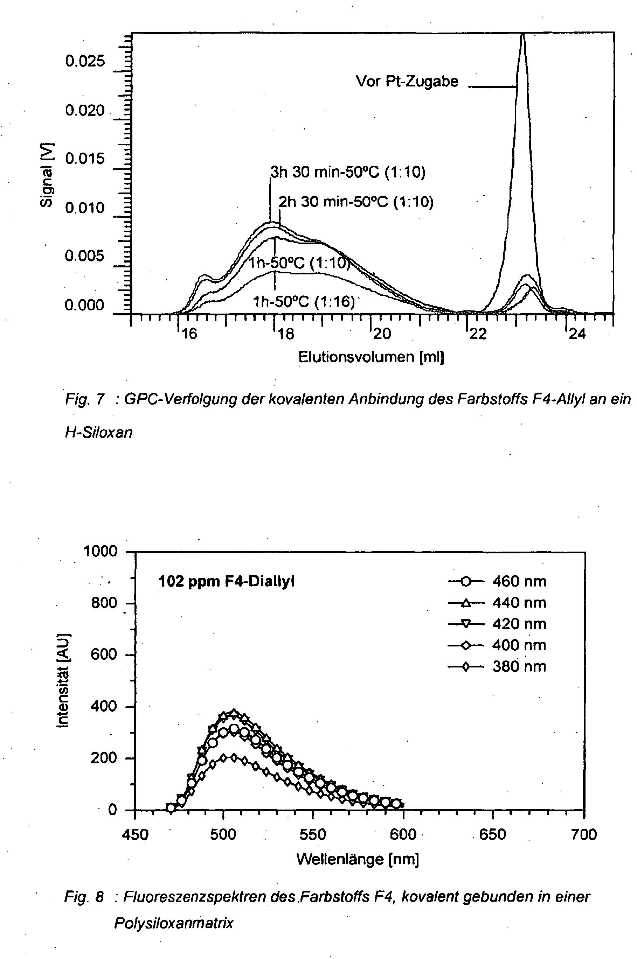

Analog zum Beispiel 2 wurden 1,25 g HMS-501 (ABCR GmbH, Deutschland) in 4 ml Toluen in einem 10-ml-Zweihalskolben mit Rückflusskühler, Magnetrührer und Wasserbad gelöst und mit 4 mg (8,72·10⁻⁶ mol) des Coumarin-Farbstoffs F4 (M = 458,59 g/mol) versetzt. Der Farbstoff löste sich allmählich unter Rühren bei 50 °C. Nach dem Auflösen wurden 30 µl der Reaktionsmischung als Nullprobe entnommen, mit 450 µl THF verdünnt und mit der GPC untersucht. Die Reaktionsapparatur wurde danach 7 min mit Stickstoff gespült und mit einem Septum sowie einem N₂-Ballon verschlossen. Anschließend wurden über das Septum 10 µl des verdünnten Platin-Katalysators (SIP 6831.2 von ABCR GmbH, Deutschland, Verdünnung 1:10 mit Xylol) zugegeben und die Reaktion bei 50 °C gestartet. Zur Verfolgung des Umsatzes wurden innerhalb von 3,5 h Reaktionszeit 4 Proben a 30 µl entnommen, wie oben verdünnt, und mit der GPC untersucht. Die erhaltenen GPC-Chromatogramme sind in **Fig. 7** dargestellt. Der Vergleich der unterschiedlichen Graphen zeigt, dass die Umsetzung nach 3,5 h weitgehend abgeschlossen ist. Überraschenderweise wurde bei der Reaktion trotz zweier reaktiver Allylsubstitutuenten keine Vernetzung des H-Siloxans beobachtet.

### Aufarbeitung des Reaktionsprodukts

Zur Entfernung des Katalysators und der nicht umgesetzten Farbstoffreste wurde der Reaktionsansatz über eine 6-ml-SPE-Säule mit 200 mg "Spheropor H" Sorbens (Polymerics GmbH, Berlin, Deutschland) filtriert und 2 mal mit 1,5 ml Toluen nachgewaschen. Die Filtrate wurden vereinigt und bei 60 °C und 21 mbar Vakuum am Rotationsverdampfer von Toluen befreit. Es wurden 1,0151 g fluoreszierendes H-Siloxan als grüne Flüssigkeit erhalten. Dieses H-Siloxan wird als H-Siloxan-F4 bezeichnet.

### Beispiel 6: Herstellung eines fluoreszierenden Polysiloxans mit einem Brechungsindex von 1,43 und kovalent gebundenem Farbstoff F4 (nicht erfinderisch).

Für die Herstellung wurde das additionsvernetzende 2K-Siloxan MED 6210 (Nusil Technology LLC, Carpinteria, California, USA) entsprechend Tabelle 2 eingewogen und homogenisiert.

**Tabelle 2: Prüfkörper aus MED 6210 kovalent modifiziert mit F4**

| Nr. | MED 6210 A | MED 6210 B | H-Siloxan-F4 | Konzentration F4 in der Matrix |
|---|---|---|---|---|
| 4 | 1,5 g | 1,404 g | 0,096 g | 102 ppm |
| 15 | | | | |

Anschließend wurde die Mischung im Vakuumtrockenschrank entlüftet und zwischen zwei Polycarbonatplatten mit Abstandshaltern von 1 mm zu einer transparenten, grün gefärbten Platte mit einer Geometrie von 40 mm × 40 mm × 1 mm ausgehärtet. Die Härtung erfolgte 2 h bei 120 °C.

Die so hergestellte Platte wurde im Fluoreszenzspektrometer (Varian Inc., USA, Modell Equlip) mit monochromatischem Licht der Wellenlängen 380 nm bis 460 nm angeregt und das jeweilige Fluoreszenz-Emissionsspektrum aufgezeichnet. Das Fluoreszenz-Emissionsspektrum der Probe 4 ist in **Fig. 8** dargestellt. Die Fluoreszenzspektren in **Fig. 8** zeigen, dass der kovalent gebundene Farbstoff F4 in der Polysiloxanmatrix MED 6210 vorteilhafterweise im UV-Bereich mit Wellenlängen von 380 nm bis 460 nm angeregt werden kann und im sichtbaren Bereich zwischen 470 nm und 600 nm ein intensives Fluoreszenzlicht emittiert.

### Beispiel 7: Herstellung eines fluoreszierenden Polysiloxans mit Brechungsindex 1,43 und kovalent gebundenen Farbstoffen F4 und M5

Für die Herstellung wurde das additionsvernetzende 2K-Siloxan MED 6210 (Nusil Technology LLC, Carpinteria, California, USA) mit einem Brechungsindex von 1,43 entsprechend Tabelle 3 eingewogen und homogenisiert.

**Tabelle 3: Prüfkörper aus MED 6210, kovalent modifiziert mit F4 und M5**

| Nr. | MED 6210 A | MED 6210 B | H-Siloxan-F4 | H-Siloxan-M5 |
|---|---|---|---|---|
| 5 | 2 g | 1,913 g | 0,025 g (20 ppm) | 0,062 g (50 ppm) |

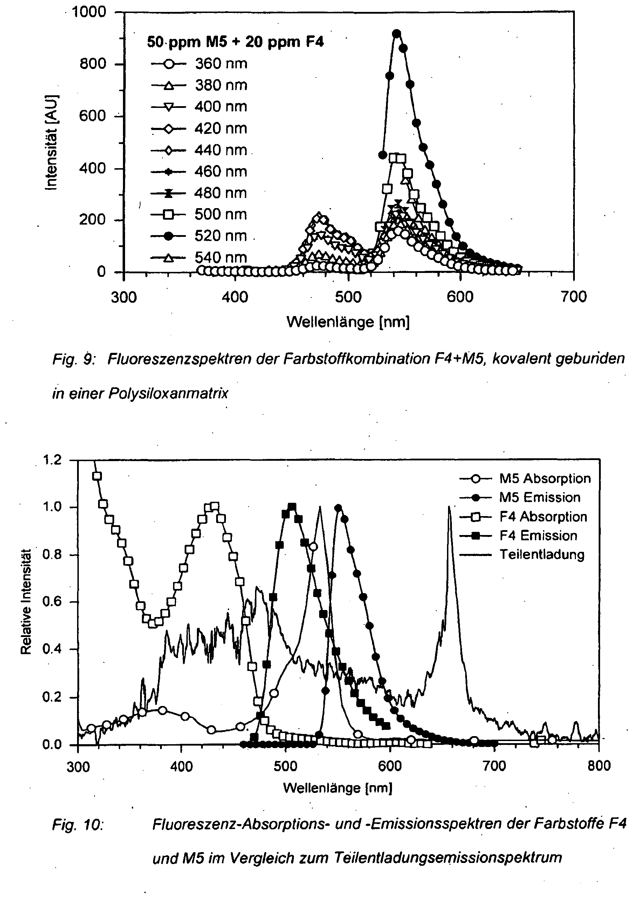

Anschließend wurde die Mischung im Vakuumtrockenschrank entlüftet und zwischen zwei Polycarbonatplatten mit Abstandshaltern von 1 mm zu einer transparenten, grüngelb fluoreszierenden Platte mit einer Geometrie von 40 mm × 40 mm × 1 mm 2 h bei 120 °C ausgehärtet. Die so hergestellte Platte wurde im Fluoreszenzspektrometer mit monochromatischem Licht der Wellenlängen 360 nm bis 540 nm angeregt und die jeweilige Antwort als Fluoreszenz-Emissionsspektrum aufgezeichnet. Die Fluoreszenz-Emissionsspektren der Probe 5 sind in **Fig.** 9 dargestellt. **Fig.** 10 zeigt die Fluoreszenz-Absorptions- und -Emissionsspektren der Farbstoffe F4 und M5 im Vergleich zu einem Teilentladungsemissionsspektrum.

Überraschenderweise zeigen die Fluoreszenz-Emissionsspektren in **Fig. 9**, dass sich die kovalent gebundenen Farbstoffe F4 und M5 in der Polysiloxanmatrix in ihren spektralen Eigenschaften sehr gut ergänzen und nicht gegenseitig löschen. Das Material zeigt ein erweitertes Absorptionsgebiet von 360 nm bis 540 nm und ein ebenfalls erweitertes Emissionsgebiet, das von 450 nm bis 650 nm reicht. Hieraus folgen vorteilhafte Eigenschaften des erfindungsgemäßen Materials, Teilentladungswellenlängen effektiv zu absorbieren und im Empfindlichkeitsbereich von APD-Detektoren passende Wellenlängen zu emittieren (Fig. 10).

### Beispiel 8: Herstellung fluoreszierender Polysiloxane mit einem Brechungsindex von 1,54 und kovalent gebundenem Farbstoff M5

Zur Herstellung wurde das 2K-Siloxansystem OE 6636 (Dow Corning Corp., USA) mit einem Brechungsindex von 1,54 entsprechen der Tabelle 4 mit dem H-Siloxan-M5 zusammengesetzt und homogenisiert.

**Tabelle 4: Prüfkörper aus OE 6636, kovalent modifiziert mit M5**

| Nr. | OE 6636 A | OE 6636 B | H-Siloxan-M5 | Konzentration M5 in der Matrix |
|---|---|---|---|---|
| 6 | 1 g | 1,88 g | 0,12 g | 40 ppm |
| 7 | 1 g | 1,76 g | 0,24 g | 80 ppm |
| 8 | 1 g | 1,64 g | 0,36 g | 120 ppm |

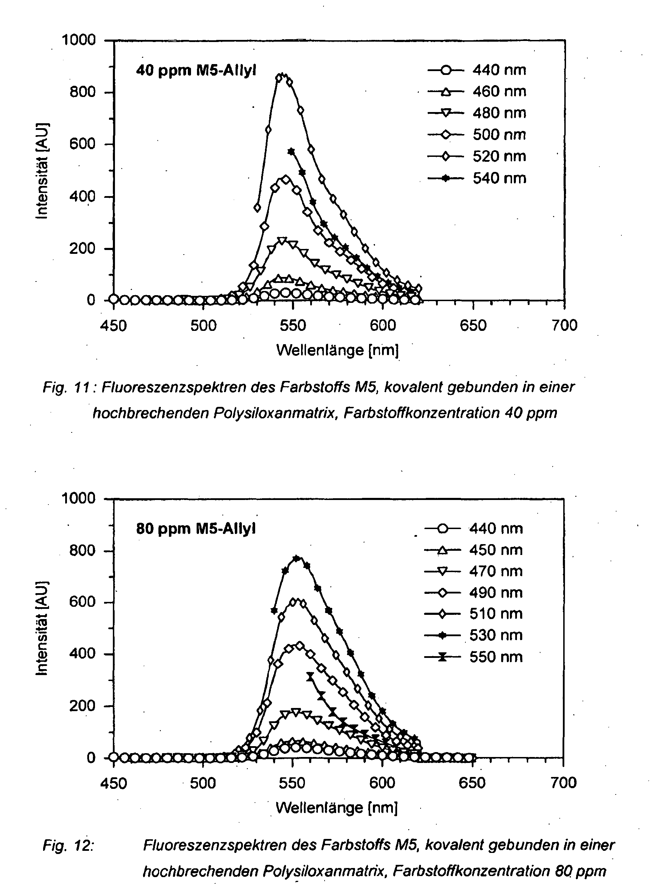

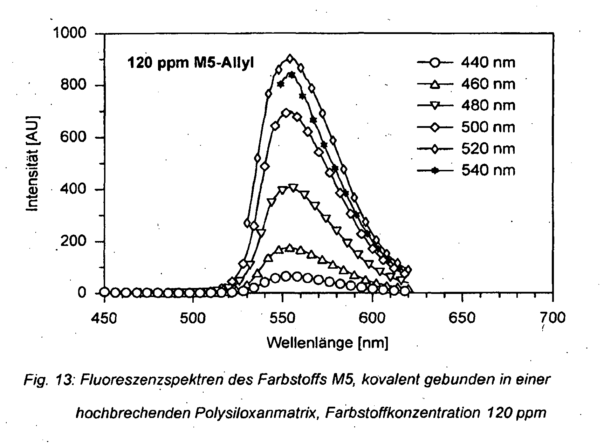

Anschließend wurde die Mischung im Vakuumtrockenschrank entlüftet und zwischen zwei Polycarbonatplatten mit Abstandshaltern von 1 mm zu einer transparenten, gelb fluoreszierenden Platte mit einer Geometrie von 40 mm × 40 mm × 1 mm 2 h bei 120 °C ausgehärtet. Die so hergestellten Prüfkörper wurden im Fluoreszenzspektrometer mit monochromatischem Licht der Wellenlängen 440 nm bis 540 nm angeregt und die jeweilige Antwort darauf als Fluoreszenz-Emissionsspektrum aufgezeichnet. Die Fluoreszenzspektren der Proben 6 bis 8 sind in **Fig. 11, Fig. 12** und **Fig. 13** dargestellt.

Aus den Fluoreszenzspektren geht hervor, dass das kovalent mit M5 modifizierte, hochbrechende Siloxansystem OE 6636 in einem ähnlichen Wellenlängenbereich absorbiert und emittiert, wie das mit M5 modifizierte, niedrigbrechende Siloxansystem MED 6210. Das Absorptionsgebiet liegt zwischen 440 nm und 540 nm, das Emissionsgebiet dagegen zwischen 520 nm und 650 nm.

Überraschenderweise ergab die Kombination des mit M5 kovalent modifizierten H-Siloxans, das vorwiegend ein Polydimethylsiloxan ist, mit dem System OE 6636, das vorwiegend ein Polydiphenylsiloxan ist, keine Trübungen oder Ausfällungen.

### Beispiel 9: Synthese des Naphthalimidfarbstoffs F6 (nicht erfinderisch).

In einem Einhalskolben wurden 0,501 g 4-Bromo-1,8-naphatalimid (Sigma-Aldrich) in Toluen gelöst. Hierzu wurde eine Lösung aus 0,200 g Allylamin-Hydrochlorid in 0,61 ml Triethylamin und 1 ml THF:Ethanol (1:1) gegeben. Diese Mischung wurde 16 Stunden bei 85 °C unter Rühren erhitzt. Die nun gelbliche Lösung wurde zur Trockene eingedampft und der Rückstand säulenchromatografisch an Kieselgel 60 gereinigt. Das Produkt wurde mit einer 10:1-Mischung Dichlormethan:Ethylacetat eluiert. Nach dem Entfernen des Lösungsmittels wurde ein weißer Feststoff F6a in einer Ausbeute von 75% erhalten (0,428 g).

0,400 g (1,26 mmol) des weißen Feststoffs F6a wurden in 30 ml DMF gelöst und mit 0,500 g Phenol und 0,694 g (5,02 mmol) Kaliumcarbonat versetzt. Die Mischung wurde auf 145 °C erhitzt und 1,5 Stunden bei dieser Temperatur gerührt. Nach dem Abkühlen auf Raumtemperatur wurde das Lösungsmittel am Rotationsverdampfer entfernt und der bräunliche Rückstand in 100 ml Chloroform aufgenommen. Die organische Phase wurde mit je 50 ml 5%iger Natriumhydroxidlösung (2×), Wasser (2×) und gesättigter Natriumchloridlösung (1×) gewaschen und über MgSO4 getrocknet. Der gelbe Rückstand wurde an Kieselgel 60 chromatografiert. Das Produkt konnte mit einer Mischung aus 8:1 Dichloromethan:Ethylacetat eluiert werden. Nach Entfernung des Lösungsmittelgemischs konnten 94 % (0,392 g) F6 erhalten werden. Die Quantenausbeute von F6 (10⁻⁵ M) in Momentive RTV 655 beträgt λₑₓ(371) = 0,75.

Die Hydrosilylierungsreaktion des Farbstoffs F6 wurde in Gegenwart eines Karstedt-Platinkatalysators (Platin-Divinyltetramethyldisiloxan) mit der H-Siloxan-Modellverbindung 1,1,3,3-Tetramethyldisilan nach dem folgenden Schema durchgeführt.

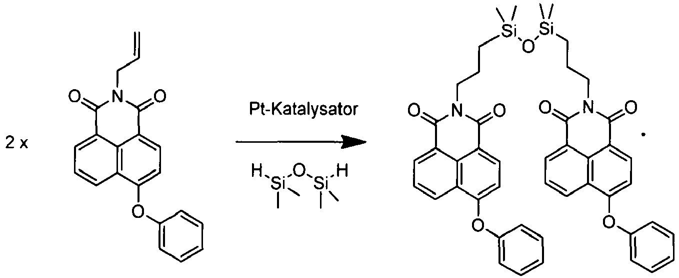

Der Fortschritt der Reaktion wurde zusätzlich durch ¹H-NMR-Messungen kontrolliert. Hierzu wurden Proben der Reaktionslösung zu Beginn der Reaktion und 24 Stunden nach Reaktionsbeginn entnommen, das Lösungsmittel abgedampft und die Proben in CDCl₃ gelöst.

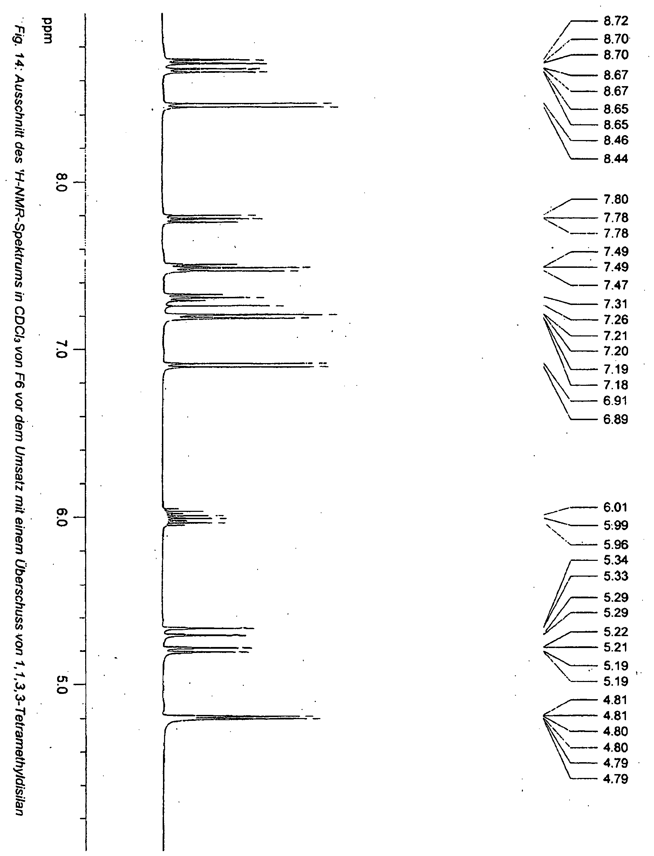

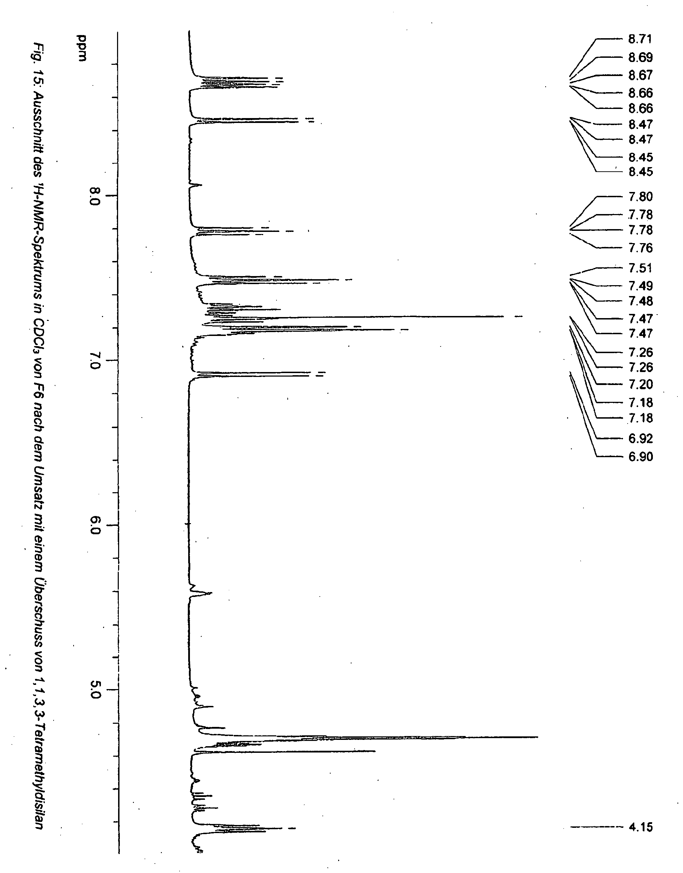

Im Ausschnitt des ¹H-NMR-Spektrums sind die Resonanzen des Farbstoffs F6 vor (Fig. 14) und nach (Fig. 15) der Silylierungsreaktion dargestellt. Das Verschwinden der Allylresonanzen und das Entstehen neuer Resonanzen im aliphatischen Bereich (z.B. bei 4,16 ppm) belegen die kovalente Anbindung des Farbstoffs F6 an das H-Siloxan.

### Beispiel 10: Bestimmung mechanischer Eigenschaften

Für die Herstellung von Prüfkörpern wurde das additionsvernetzende 2K-Silikon Lumisil LR 7600 (Wacker Chemie AG, Deutschland) mit dem Brechungsindex 1,41 entsprechend Tabelle 5 eingewogen und homogenisiert.

**Tabelle 5: Prüfkörper aus Lumisil LR 7600 unmodifiziert und kovalent modifiziert mit F4 und M5**

| Nr. | LR 7600 A | LR 7600 B | H-Siloxan-F4 | H-Siloxan-M5 |
|---|---|---|---|---|
| 9 | 25 g | 24,224 g | - | 0,775 g (50 ppm) |
| 10 | 25 g | 24,687 g | 0,313 g (20 ppm) | - |
| 11 | 25 g | 25,000 g | - | - |

Anschließend wurden die Mischungen im Vakuumtrockenschrank entlüftet und in Polycarbonatformen zu transparenten Platten (2 Stück pro Farbstoffvariante) der Geometrie 100 mm × 100 mm × 2 mm für 2 h bei 120 °C ausgehärtet. Aus den Platten wurden jeweils 10 Schulterstäbe Typ 5A nach DIN EN ISO 527-2 ausgestanzt und im Zugversuch nach DIN 53505 bei einer Prüfgeschwindigkeit von 250 mm/min unter Normalklima (23 °C, 50% r.H.) geprüft. Aus den erhaltenen Zug-Dehnungs-Kurven wurden Zugfestigkeit und Reißdehnung ermittelt.

Die zweite Platte wurde in Anlehnung an IEC 62067 künstlich gealtert. Die Alterung der Platten bestand aus 20 Zyklen mit jeweils 2 h Aufheizen von 25 °C auf 95 °C, 2 h isotherme Lagerung bei 95 °C und danach 8 h Abkühlen auf 25 °C. Nach der Alterung wurden die mechanischen Eigenschaften erneut bestimmt und mit denen vor der Alterung verglichen (Tabelle 6). Als Referenzmaterial diente das kommerzielle Produkt Powersil 600 (Wacker Chemie AG, Deutschland), welches in konventionellen Hochspannungseinrichtungen verwendet wird. Powersil 600 ist ein gefülltes und nicht-transparentes Siloxanelastomer.

**Tabelle 6: Mechanische Eigenschaften (Zugfestigkeit σ und Reißdehnung ε) vor und nach der Alterung**

| Zustand | Probe 11 | | Probe 10 | | Probe 9 | | Powersil 600 | |
|---|---|---|---|---|---|---|---|---|
| | σ [MPa] | ε [%] | σ [MPa] | ε [%] | σ [MPa] | ε [%] | σ [MPa] | ε [%] |
| neu | 5,6 | 432 | 4,6 | 488 | 4,0 | 467 | 6,6 | 447 |
| gealtert | 4,0 | 377 | 4,0 | 375 | 4,0 | 341 | 6,3 | 385 |

Der Vergleich der Zugfestigkeit der fluoreszierenden Polysiloxane (Probe 9 und 10) mit dem unmodifizierten Polysiloxan Lumisil LR 7600 (Probe 11) zeigt, dass die Zugfestigkeit im neuen Zustand durch die Modifizierung ca. 18% bzw. 30% erniedrigt wird, dagegen nach der Alterung in allen Proben auf gleichem Niveau von ca. 4 MPa bleibt.

Der Vergleich der Reißdehnung zeigt, dass fluoreszierenden Proben im Vergleich zur unmodifizierten Probe vor der Alterung eine 8% bis 13% höhere Reißdehnung aufweisen. Nach der Alterung ist die Reißdehnung der modifizierten Probe 10 im Fehlerbereich gleich und die der Probe 9 geringfügig (10%) kleiner als bei der unmodifizierten Probe 11.

Der Vergleich der mechanischen Eigenschaften des unmodifizierten (Probe 11) und des modifizierten LR 7600 (Proben 9 und 10) mit den mechanischen Eigenschaften des konventionellen, nicht-transparenten Polysiloxans Powersil 600 zeigt überraschenderweise, dass die transparenten Polysiloxane die mechanischen Anforderungen für Hochspannungseinrichtungen erfüllen.

### Beispiel 11: Bestimmung elektrischer Eigenschaften

Für die Herstellung von Prüfkörpern wurde das additionsvernetzende 2K-Silikon Lumisil LR 7600 (Wacker Chemie AG, Deutschland) mit dem Brechungsindex 1,41 entsprechend Tabelle 5 eingewogen und homogenisiert. Anschließend wurden die Mischungen im Vakuumtrockenschrank entlüftet und in Polycarbonatformen zu transparenten Platten für 2 h bei 120 °C ausgehärtet. Für die Messung der Durchschlagfestigkeit wurde eine Geometrie von 100 mm × 100 mm × 0,5 mm (1 Stück pro Farbstoffvariante) und für die Bestimmung des Verlustfaktors und der Kapazität wurde die Geometrie 100 mm × 100 mm × 2 mm (2 Stück pro Farbstoffvariante) verwendet.

Für die Bestimmung der Durchschlagfestigkeit wurde der 0,5 mm dicke Prüfkörper auf eine plane Erdelektrode und eine kugelförmige Hochspannungselektrode (Ø 20 mm) von oben auf den Prüfkörper gelegt. Anschließend wurde die Hochspannung von 1 kV (Wechselspannung, 50 Hz) für jeweils 1 min angelegt und in Schritten von 1 kV bis zum Durchschlag erhöht. Die Messungen wurden an 5 unterschiedlichen Positionen des Prüfkörpers wiederholt und der Mittelwert ausgewertet.

Die Bestimmung der Kapazität und des Verlustfaktors erfolgte an den 2 mm dicken Prüfkörpern in einer Prüfapparatur für feste Isolierstoffe vom Typ 2904 (Tettex Instruments, Basel, Schweiz). Die Prüfkörper wurden zwischen den planaren Elektroden der Apparatur platziert, mit einer Glashaube abgedeckt und Kapazität und Verlustfaktor bei Raumtemperatur (23 °C) und bei erhöhter Temperatur (90 °C) bei einer Spannung von 1,5 kV (Wechselspannung, 50 Hz) bestimmt. Die Prüfkörper für die Bestimmung von Kapazität und Verlustfaktor wurden nach der im Beispiel 10 beschriebenen Methode gealtert und nach der Alterung erneut untersucht. Die erhaltenen Messwerte vor und nach der Alterung sind in Tabelle 7 und Tabelle 8 dargestellt.

**Tabelle 7: Verlustfaktor tanδ und Kapazität C vor und nach der Alterung**

| | Probe 11 | | Probe 10 | | Probe 9 | | Powersil 600 | |
|---|---|---|---|---|---|---|---|---|
| Zustand | tanδ [10⁻⁴] | C [pF] | tanδ [10⁻⁴] | C [pF] | tanδ [10⁻⁴] | C [pF] | tanδ [10⁻⁴] | C [pF] |
| Neu (23°C) | 9,1 | 22,9 | 8,7 | 24,6 | 8,8 | 23,7 | 7,3 | 24,6 |
| Neu (90°C) | 18,3 | 21,0 | 18,6 | 22,7 | 19,3 | 22,1 | 38,3 | 23,1 |
| Gealtert (23 °C) | 8,2 | 23,4 | 8,5 | 23,2 | 8,6 | 23,7 | 4,3 | 25,3 |
| Gealtert (90 °C) | 22,0 | 22,2 | 18,7 | 21,4 | 17,7 | 23,7 | 12,9 | 23,4 |

**Tabelle 8: Durchschlagfestigkeit E_{b}**

| Durchschlagfestigkeit E_{b} [kV/mm] | | | | |
|---|---|---|---|---|
| Zustand | Probe 11 | Probe 10 | Probe 9 | Powersil 600 |
| Neu (23 °C) | 30,6 | 32,3 | 32,7 | 29,6 |

Unerwartet zeigt das transparente Material LR7600 (Probe 11) eine gleich hohe Durchschlagfestigkeit wie Powersil 600. Diese wird durch die Modifizierung mit den erfindungsgemäßen Fluoreszenzfarbstoffen im Rahmen der Messfehler nicht verändert.

Bei 23 °C liegt der Verlustfaktor des unmodifizierten Polysiloxans bei 9,1 × 10⁻⁴ und wird durch die Modifizierung mit den Fluoreszenzfarbstoffen praktisch nicht verändert. Die Werte des Verlustfaktors bei 90 °C zeigen vor und nach der Alterung für alle Lumisil-LR-7600-Proben 9, 10 und 11 praktisch keine Veränderung. Dieses Verhalten zeigt, dass Lumisil LR 7600 alterungsstabil ist und diese Stabilität durch die Modifizierung mit den erfindungsgemäßen Fluoreszenzfarbstoffen überraschenderweise nicht beeinflusst wird und sich dadurch besonders als Werkstoff für Hochspannungseinrichtungen eignet.

Die Kapazität aller Proben zeigt keinen Einfluss der Art des Materials, der Modifizierung oder der Alterung und liegt immer im Bereich 21 pF bis 24 pF.

Der Vergleich der elektrischen Eigenschaften des unmodifizierten (Probe 11) und des modifizierten LR 7600 (Proben 9 und 10) mit den elektrischen Eigenschaften des konventionellen, nicht-transparenten Polysiloxans Powersil 600 zeigt unerwartet, dass die transparenten Polysiloxane die elektrischen Anforderungen für Hochspannungseinrichtungen erfüllen.

In der Kombination ihrer optischen, elektrischen und mechanischen Eigenschaften erschließen sich für die erfindungsgemäßen fluoreszierenden Polysiloxane daher unerwartet neue Anwendungsgebiete und zwar Anwendungsgebiete für die ein dringender Bedarf besteht und dem bisher nicht befriedigend entsprochen werden konnte.

Polysiloxane mit kovalent gebundenen Fluoreszenzfarbstoffen als Werkstoff für Lichtwellenleiter und für Hochspannungsgarnituren sind aus dem Stand der Technik nicht bekannt. Für den Fachmann ist es auch nicht naheliegend, sie für diesen Zweck einzusetzen, weil organische Farbstoffe in Isolierungen von Hochspannungsgarnituren für den Fachmann bisher als Verunreinigung gelten und Keime für das Tree-Wachstum darstellen können, das letztlich mit einem Durchschlag enden kann.

Überraschenderweise ergaben die Messungen des Durchschlagsverhaltens an den kovalent mit Fluoreszenzfarbstoffen modifizierten Polysiloxanen keine Erniedrigung der Durchschlagsfestigkeit dieses Werkstoffes.

Als ein weiterer überraschend positiver optischer Effekt erweist sich, dass die erfindungsgemäßen Polysiloxane eine Verschiebung des Emissionsbereiches aus dem UV-Licht bzw. dessen Erweiterung in den Bereich des sichtbaren Lichtes mit Wellenlängen bis 800 nm aufweisen, so dass sie für Detektoren, deren höchster Wirkungsgrad in diesem Bereich liegt, besonders geeignet sind und die darüber hinaus deren kostengünstigere Herstellung ermöglichen.

Entgegen der dem Fachmann bekannten Erscheinung, dass beim Mischen von Farbstoffen in der Regel Löschungseffekte zu verzeichnen sind, führt das erfindungsgemäße Verfahren zu fluoreszierenden Polysiloxanen mit dem überraschend positiven Effekt der Verstärkung deren Absorptions- und Emissionseigenschaften.

Des Weiteren hat sich für die neuen Polysiloxane deren hohe elektrische Durchschlagsfestigkeit in einem Spannungsbereich bis 500 kV als ein ebenfalls unerwarteter Effekt herausgestellt. Diese Durchschlagsfestigkeit findet ihre Erklärung insbesondere in dem erfindungswesentlichen Schritt des Verfahrens für die Herstellung der Polysiloxane, der Entfernung des Platin-Katalysators mittels eines Sorbens.

Mit den genannten optischen und elektrischen Eigenschaften sowie den ebenfalls positiven Effekten einer Temperaturbeständigkeit bis 150°C und der hohen Reißdehnung bis zu 400% unterscheiden sich die erfindungsgemäßen Polysiloxane in ihren Eigenschaften wesentlich von Polysiloxanen nach dem Stand der Technik und begründen insofern einen Werkstoff, der den hohen Anforderungen für Hochspannungseinrichtungen genügt.

Mit der Abkehr von nuklearen und fossilen Energieträgern, dem Übergang zu erneuerbaren Energien und der damit verbundenen Errichtung von Offshore-Windkraftanlagen stellen sich wesentlich höhere Anforderungen zum Beispiel an Kabelmuffen, mit denen Seekabel und auch unterirdisch verlegte Kabel zur Weiterleitung der Energie auf Höchstspannungsebene ausgestattet werden müssen. Für derartige Kabelmuffen ist ein zuverlässiges Monitoring unerlässlich, um rechtzeitig Risiken im Alterungsprozess von Materialien und Defekte feststellen und lokalisieren zu können. Mit den erfindungsgemäßen Polysiloxane und ihren herausragenden Eigenschaften wird diesem dringend zu lösenden technischen Problem auf eine wirtschaftlich vorteilhafte Art und Weise entsprochen.

## Patentansprüche

1. Fluoreszierendes Siloxanelastomer, das in seiner Netzwerkstruktur folgende Strukturelemente enthält: 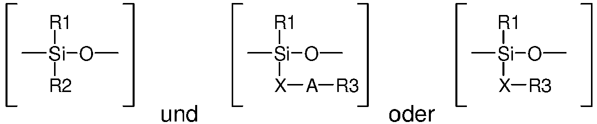 wobei:
• R1 und R2 gleich oder verschieden sind, unabhängig voneinander jeweils einen Methyl-, Phenyl-, Vinyl-Substituenten oder ein H-Atom bedeuten;
• X eine gesättigte oder ungesättigte Kohlenwasserstoffgruppe mit 2 bis 6 C-Atomen bedeutet;
• A ein Sauerstoff-, Stickstoff- oder Schwefel-Atom darstellt;
• R3 ein Fluoreszenzfarbstoff-Substituent aus der BODIPY- Familie ist.

2. Fluoreszierendes Siloxanelastomer nach Anspruch 1, **dadurch gekennzeichnet, dass** der BODIPY-Farbstoff-Substitutent R3 die allgemeine Formel 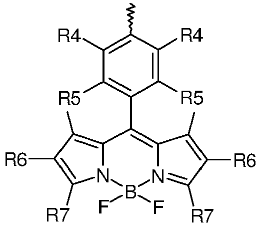 aufweist, in der:
• R4, R5 gleich oder verschieden sein können und ein Wasserstoffatom, ein Fluoratom oder ein Trifluormethylrest bedeuten;
• R6 eine CH₃- oder C₂H₅-Gruppe darstellen;
• R7 ein CH₃-, C₂H₅-, 4-Dimethylaminostyryl-, 3,5-Ditrifluormethylstyryl- bzw. 4-Dimethylamino-naphthylvinyl-Rest bedeutet.

3. Fluoreszierendes Siloxanelastomer nach Anspruch 1, **dadurch gekennzeichnet, dass** die BODIPY-Fluorophore zusammen mit Coumarin-Fluorophoren den Fluoreszenzfarbstoff-Substituenten bilden.

4. Fluoreszierendes Siloxanelastomer nach Anspruch 3, **dadurch gekennzeichnet,**
**dass** der funktionalisierte Coumarin-Farbstoff die allgemeine Formel 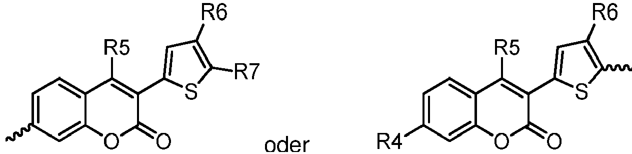 oder 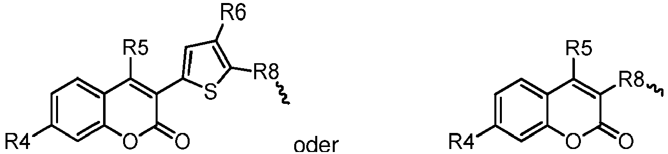 aufweist, in der:
• R4 ein H-Atom oder einen OCH₃-, NHCH₃-, N(CH₃)₂-, NH(C₂H₅)-, N(C₂H₅)₂-Rest bedeutet;
• R5 ein H- oder F-Atom oder ein CH₃-, CF₃-Rest sein kann;
• R6, R7 gleich oder verschieden sein können und ein H-Atom oder ein CH₃-Rest darstellt,
• R8 eine CO- oder SO₂-Gruppe darstellt.

5. Fluoreszierendes Siloxanelastomer nach Anspruch 1, **dadurch gekennzeichnet, dass** die BODIPY-Fluorophore zusammen mit Naphthalimid-Fluorophoren den Fluoreszenzfarbstoff-Substituenten bilden.

6. Fluoreszierendes Siloxanelastomer nach Anspruch 5, **dadurch gekennzeichnet, dass** der funktionalisierte Naphthalimid-Farbstoff die allgemeine Formel 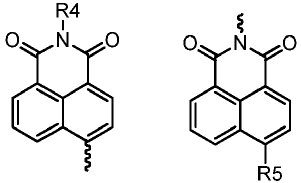 aufweist, in der:
• R4 ein CH₃-, C2H₅-, C₃H₇-, Phenyl-, Mesityl- oder eine (2,6-Diisopropyl)phenylGruppe bedeutet;
• R5 ein H-Atom oder einen CH₃-, OCH₃-, O(C₆H₅)-Rest darstellt.

7. Fluoreszierendes Siloxanelastomer nach Anspruch 1 bis 6, **dadurch gekennzeichnet, dass** es Absorptions- und Emissionsmaxima im Wellenlängenbereich von 300 nm bis 800 nm aufweist.

8. Fluoreszierendes Siloxanelastomer nach Anspruch 1 bis 7, **dadurch gekennzeichnet, dass** es eine Farbstoffkonzentration von 5 ppm bis 500 ppm aufweist.

9. Fluoreszierendes Siloxanelastomer nach Anspruch 1 bis 8, **dadurch gekennzeichnet, dass** es einen Füllstoff enthält.

10. Fluoreszierendes Siloxanelastomer nach Anspruch 9, **dadurch gekennzeichnet, dass** der Füllstoff pyrogene Kieselsäure oder Titandioxid oder Aluminiumoxid oder Zirkonoxid ist.

11. Fluoreszierendes Siloxanelastomer nach Anspruch 1 bis 10, **dadurch gekennzeichnet, dass** es eine Reißdehnung bis 400% aufweist.

12. Verfahren zur Herstellung eines fluoreszierenden Siloxanelastomers gemäß Anspruch 1, umfassend:
• Funktionalisierung des Fluoreszenzfarbstoffs mit einer ungesättigten Kohlenwasserstoffgruppe für eine Hydrosylilierungsreaktion in einem polaren Lösungsmittel bei erhöhter Temperatur und unter einer Stickstoffatmosphäre unter Normaldruck oder einem erhöhten Druck,
• Umsetzung des funktionalisierten Farbstoffs mit einem H-Siloxan in einem unpolaren Lösungsmittel in Gegenwart von Platin oder Rhodium als Hydrosylilierungskatalysator bei Raumtemperatur oder einer erhöhten Temperatur,
• Entfernung des Katalysators mittels eines Sorbens und des Lösungsmittels unter vermindertem Druck,
• Versetzen eines additionsvernetzenden, zweikomponentigen Siloxangemisches mit dem funktionalisierten H-Siloxan bei Raumtemperatur,
• Härtung des Siloxangemisches bei einer anwendungsspezifischen Temperatur bis 200 C.

13. Verfahren nach Anspruch 12, **dadurch gekennzeichnet, dass** das polare Lösungsmittel Acetonitril oder ein Alkohol ist und das unpolare Lösungsmittel Toluen oder ein anderer aromatischer Kohlenwasserstoff, ein aliphatischer oder chlorierter Kohlenwasserstoff, ein cyclischer Ether oder ein Vinylsiloxan ist.

14. Verwendung des fluoreszierenden Siloxanelastomers gemäß den Ansprüchen 1 bis 11 zur Herstellung von Sensoren zur Detektion von Teilentladungen in Hochspannungseinrichtungen.

15. Verwendung des fluoreszierenden Siloxanelastomers gemäß den Ansprüchen 1 bis 11 zur Herstellung von Sensoren als Lichtwellenleiter in Form von Fasern, Platten, Streifen, Scheiben oder Segmenten.

16. Verwendung des fluoreszierenden Siloxanelastomers gemäß den Ansprüchen 1 bis 11 als Werkstoff für Hochspannungseinrichtungen.

## Claims

1. Fluorescent siloxane elastomer which in its network structure comprises structural elements as follows: 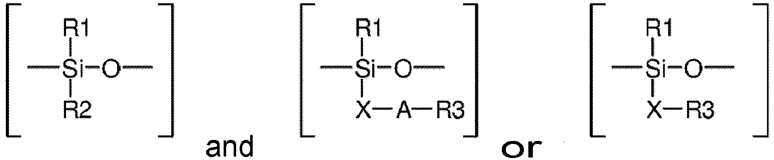 where:
• R1 and R2 are identical or different and independently of one another are each a methyl, phenyl or vinyl substituent or an H atom;
• X is a saturated or unsaturated hydrocarbon group having 2 to 6 C atoms;
• A is an oxygen, nitrogen or sulfur atom;
• R3 is a fluorescent dye substituent from the BODIPY family.

2. Fluorescent siloxane elastomer according to Claim 1, **characterized in that** the BODIPY dye substituent R3 has the general formula 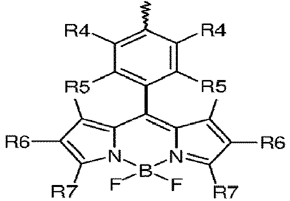 in which
• R4, R5 may be identical or different and are a hydrogen atom, a fluorine atom or a trifluoromethyl radical;
• R6 are a CH₃ or C₂H₅ group;
• R7 is a CH₃, C₂H₅, 4-dimethylaminostyryl, 3, 5-ditrifluoromethylstyryl or 4-dimethylaminonaphthylvinyl radical.

3. Fluorescent siloxane elastomer according to Claim 1, **characterized in that** the BODIPY fluorophors together with coumarin fluorophors form the fluorescent dye substituent.

4. Fluorescent siloxane elastomer according to Claim 3, **characterized in that** the functionalized coumarin dye has the general formula 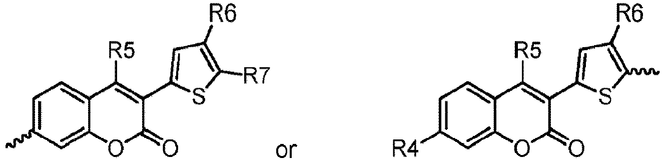 or 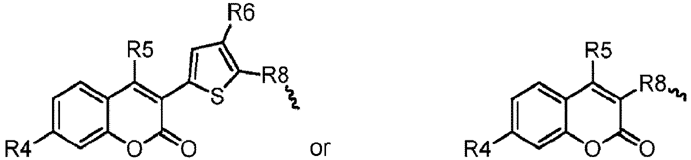 in which:
• R4 is an H atom or an OCH₃, NHCH₃, N (CH₃) ₂, NH(C₂H₅) or N(C₂H₅)₂ radical;
• R5 may be an H or F atom or a CH₃ or CF₃ radical;
• R6, R7 may be identical or different and is an H atom or a CH₃ radical;
• R8 is a CO or SO₂ group.

5. Fluorescent siloxane elastomer according to Claim 1, **characterized in that** the BODIPY fluorophors together with naphthalimide fluorophors form the fluorescent dye substituent.

6. Fluorescent siloxane elastomer according to Claim 5, **characterized in that** the functionalized naphthalimide dye has the general formula 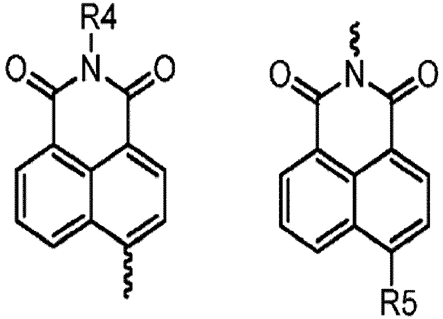 in which
• R4 is a CH₃, C₂H₅, C₃H₇, phenyl, mesityl or a (2,6-diisopropyl)phenyl group;
• R5 is an H atom or a CH₃, OCH₃ or O (C₆H₅) radical.

7. Fluorescent siloxane elastomer according to Claim 1 to 6, **characterized in that** it has absorption maxima and emission maxima in the wavelength range from 300 nm to 800 nm.

8. Fluorescent siloxane elastomer according to Claim 1 to 7, **characterized in that** it has a dye concentration of 5 ppm to 500 ppm.

9. Fluorescent siloxane elastomer according to Claim 1 to 8, **characterized in that** it comprises a filling.

10. Fluorescent siloxane elastomer according to Claim 9, **characterized in that** the filling is fumed silica or titanium dioxide or aluminium oxide or zirconium oxide.

11. Fluorescent siloxane elastomer according to Claim 1 to 10, **characterized in that** it has an elongation at break of up to 400%.

12. Process for producing a fluorescent siloxane elastomer according to Claim 1, comprising:
• functionalizing the fluorescent dye with an unsaturated hydrocarbon group for a hydrosilylation reaction in a polar solvent at elevated temperature and under a nitrogen atmosphere at atmospheric pressure or an increased pressure,
• reacting the functionalized dye with an H-siloxane in a non-polar solvent in the presence of platinum or rhodium as hydrosilylation catalysts at room temperature or an increased temperature,
• removing the catalyst by means of an absorbent and the solvent under reduced pressure,
• admixing an addition-crosslinking, two-component siloxane mixture with the functionalized H-siloxane at room temperature,
• curing the siloxane mixture at an application-specific temperature of up to 200C.

13. Process according to Claim 12, **characterized in that** the polar solvent is acetonitrile or an alcohol and the non-polar solvent is toluene or another aromatic hydrocarbon, an aliphatic or chlorinated hydrocarbon, a cyclic ether or a vinylsiloxane.

14. Use of the fluorescent siloxane elastomer according to Claims 1 to 11 for producing sensors for detecting partial discharges in high-voltage devices.

15. Use of the fluorescent siloxane elastomer according to Claims 1 to 11 for producing sensors as optical waveguides in the form of fibres, plates, strips, sheets or segments.

16. Use of the fluorescent siloxane elastomer according to Claims 1 to 11 as material for high-voltage devices.

## Revendications

1. Élastomère de siloxane fluorescent qui contient dans sa structure réticulaire les éléments structuraux suivants : 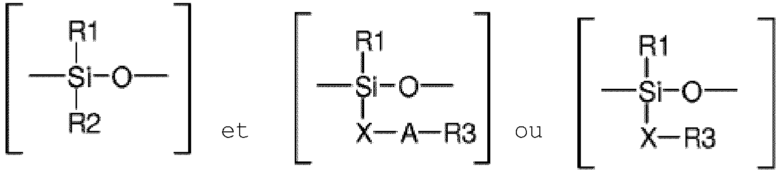 dans lesquels :
• R1 et R2 sont identiques ou différents, et représentent chacun indépendamment de l'autre un substituant méthyle, phényle, vinyle ou un atome H ;
• X représente un groupe hydrocarboné saturé ou insaturé ayant 2 à 6 atomes de carbone ;
• A représente un atome d'oxygène, d'azote ou de soufre ;
• R3 représente un substituant de colorant fluorescent de la famille des BODIPY.

2. Élastomère de siloxane fluorescent selon la revendication 1, **caractérisé en ce que** le substituant de colorant BODIPY R3 a la formule générale 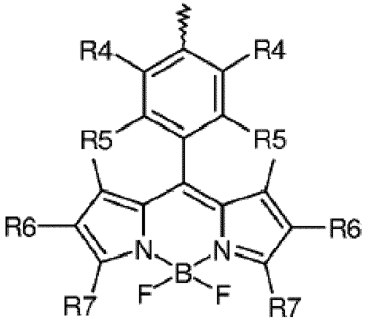 dans laquelle :
• R4, R5 peuvent être identiques ou différents et représentent un atome d'hydrogène, un atome de fluor ou un radical trifluorométhyle ;
• R6 représente un groupe CH₃ ou C₂H₅ ;
• R7 représente un radical CH₃, C₂H₅, 4-diméthylaminostyryle,3, 5-ditrifluorométhylstyryle ou 4-diméthylamino-naphtylvinyle.

3. Élastomère de siloxane fluorescent selon la revendication 1, **caractérisé en ce que** les fluorophores BODIPY forment, conjointement avec des fluorophores coumarines, le substituant de colorant fluorescent.

4. Élastomère de siloxane fluorescent selon la revendication 3, **caractérisé en ce que** le colorant de coumarine fonctionnalisé a la formule générale 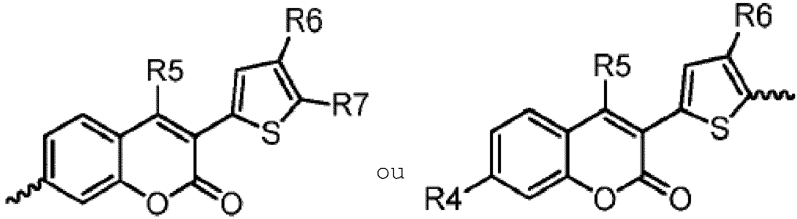 ou 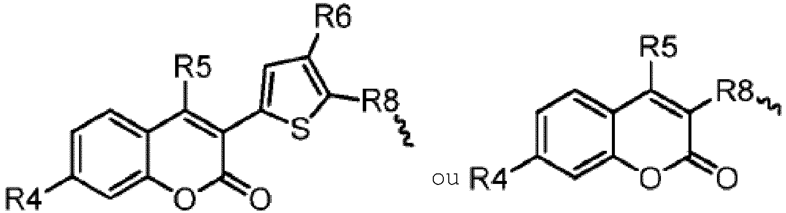 dans laquelle :
• R4 représente un atome H ou un radical OCH₃, NHCH₃, N(CH₃)₂, NH(C₂H₅), NH(C₂H₅)₂ ;
• R5 peut représenter un atome H ou F ou un radical CH₃, CF₃ ;
• R6, R7 peuvent être identiques ou différents et représentent un atome H ou un radical CH₃,
• R8 représente un groupe CO ou SO₂.

5. Élastomère de siloxane fluorescent selon la revendication 1, **caractérisé en ce que** les fluorophores BODIPY forment, conjointement avec les fluorophores naphtalimides, le substituant de colorant fluorescent.

6. Élastomère de siloxane fluorescent selon la revendication 5, **caractérisé en ce que** le colorant de naphtalimide fonctionnalisé a la formule générale 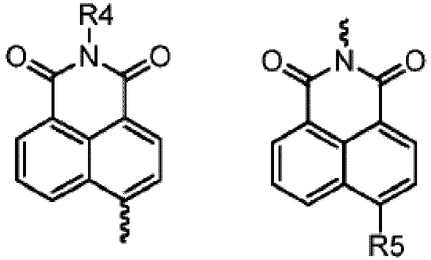 dans laquelle :
• R4 représente un groupe CH₃, C₂H₅, C₃H₇, phényle, mésityle ou (2,6-diisopropyl)phényle ;
• R5 représente un atome H ou un radical CH₃, OCH₃, O (C₆H₅) .

7. Élastomère de siloxane fluorescent selon les revendications 1 à 6, **caractérisé en ce qu'**il présente des maxima d'absorption et d'émission dans la plage de longueurs d'onde de 300 nm à 800 nm.

8. Élastomère de siloxane fluorescent selon les revendications 1 à 7, **caractérisé en ce qu'**il présente une concentration du colorant de 5 ppm à 500 ppm.

9. Élastomère de siloxane fluorescent selon les revendications 1 à 8, **caractérisé en ce qu'**il contient une charge.

10. Élastomère de siloxane fluorescent selon la revendication 9, **caractérisé en ce que** la charge est une silice pyrogène ou du dioxyde de titane ou de l'oxyde d'aluminium ou de l'oxyde de zirconium.

11. Élastomère de siloxane fluorescent selon les revendications 1 à 10, **caractérisé en ce qu'**il présente un allongement à la rupture allant jusqu'à 400 %.

12. Procédé de fabrication d'un élastomère de siloxane fluorescent selon la revendication 1, comprenant :
• la fonctionnalisation du colorant fluorescent avec un groupe hydrocarboné insaturé pour une réaction d'hydrosilylation dans un solvant polaire à haute température et sous une atmosphère d'azote sous la pression normale ou sous une pression élevée,
• réaction du colorant fonctionnalisé avec un H-siloxane dans un solvant apolaire en présence de platine ou de rhodium en tant que catalyseur d'hydrosilylation à la température ambiante ou à une température élevée,
• élimination du catalyseur à l'aide d'un sorbant et du solvant sous pression réduite,
• addition à un mélange de siloxanes à deux composants réticulables par addition du H-siloxane fonctionnalisé à la température ambiante,
• durcissement du mélange de siloxanes à une température spécifique de l'application, allant jusqu'à 200 C.

13. Procédé selon la revendication 12, **caractérisé en ce que** le solvant polaire est l'acétonitrile ou un alcool et le solvant apolaire est le toluène ou un autre hydrocarbure aromatique, un hydrocarbure aliphatique ou chloré, un éther cyclique ou un vinylsiloxane.

14. Utilisation de l'élastomère de siloxane fluorescent selon les revendications 1 à 11 pour fabriquer des capteurs destinés à la détection de décharges partielles dans des dispositifs haute tension.

15. Utilisation de l'élastomère de siloxane fluorescent selon les revendications 1 à 11 pour fabriquer des capteurs en tant que guides d'onde lumineuses sous forme de fibres, de plaques, de bandes, de disques ou de segments.

16. Utilisation de l'élastomère de siloxane fluorescent selon les revendications 1 à 11 en tant que matériau pour dispositifs haute tension.
